# EUROPÄISCHE PATENTSCHRIFT

(11) **EP 3 934 935 B1**
(45) Veröffentlichungstag und Bekanntmachung des Hinweises auf die Patenterteilung: **29.06.2022**
(21) Anmeldenummer: 20720775.4
(22) Anmeldetag: 15.04.2020
(51) Int. Cl.: B60Q 1/26, B60Q 1/50, B60Q 1/44

(54) **LEUCHTVORRICHTUNG FÜR EIN KRAFTFAHRZEUG ZUM ERZEUGEN EINER LICHTANIMATION**
LIGHTING DEVICE FOR A MOTOR VEHICLE FOR CREATING A LIGHT ANIMATION
DISPOSITIF D'ÉCLAIRAGE POUR UN VÉHICULE AUTOMOBILE SERVANT À PRODUIRE UNE ANIMATION LUMINEUSE

(30) Priorität: 17.04.2019 DE 102019205641
(43) Veröffentlichungstag der Anmeldung: 12.01.2022
(73) Patentinhaber: Audi AG, 85045 Ingolstadt (DE)
(72) Erfinder: THOMAS, Werner, 85126 Oberwöhr (DE); LENDLE, Reiner, 74855 Hassmersheim (DE)
(86) Internationale Anmeldenummer: PCT/EP2020/060628
(87) Internationale Veröffentlichungsnummer: WO 2020/212449

(56) Entgegenhaltungen:
- WO-A2-2016/001936
- DE-A1-102005 001 122
- DE-U1-202016 107 063
- FR-A1- 3 067 307
- GB-A- 2 554 103
- US-A- 4 556 862
- US-A1- 2010 308 985

## Beschreibung

Die Erfindung betrifft eine Leuchtvorrichtung für ein Kraftfahrzeug zum Erzeugen einer Lichtanimation. Darüber hinaus betrifft die Erfindung ebenfalls ein dazugehöriges Verfahren zum Erzeugen einer Lichtanimation für eine Leuchtvorrichtung eines Kraftfahrzeugs.

Heutige Lichtfunktionen in Kraftfahrzeugen werden häufig noch mit Glühlampen oder seit einiger Zeit insbesondere in hochwertigeren Kraftfahrzeugen auch mit LED-Technologie ausgeführt. Im Fall der Leuchten mit Glühlampen ist die relativ kostengünstige Herstellung ein Vorteil, während im Fall von LEDs relativ große Designmöglichkeiten, eine lange Lebensdauer und eine Energieeffizienz Vorteile versprechen.

Nach derzeitigem Kenntnisstand der Anmelderin sind alle bisherigen Lichtquellen und Punktlichtquellen nicht in der Lage, ohne Zusatzoptik Flächenlicht mit konstanter Leuchtdichte und Abstrahlcharakteristik zu bilden. Des Weiteren gelingt es mit den derzeitig vorhandenen Lichtsystemen nicht, eine relativ feingliedrige Segmentierung innerhalb von Leuchtflächen zu erzeugen.

Häufig ist zwischen den einzelnen Leuchtsegmenten ein relativ großer Trennbereich erforderlich. Zum Erzeugen einer homogenen Leuchtfläche werden oft sehr viele einzelne LED-Elemente hinter einem diffusen Material angeordnet. Damit wird das Licht dieser vielen einzelnen LED-Elemente undefiniert gestreut und so visuell der Eindruck einer homogenen leuchtenden Fläche erzeugt. Messtechnisch ist dies jedoch nicht der Fall und eine sehr hohe Inhomogenität in der Leuchtdichte kann mit entsprechender Messtechnik nachgewiesen werden. Aufgrund dieser Aspekte ergeben sich Einschränkungen in der Gestaltung und in der Animation von Lichtfunktionen.

Zum Beispiel können innerhalb einer Leuchtfläche keine präzise ausgeführten Bereiche mit unterschiedlichen Helligkeiten dargestellt werden. Darüber hinaus ist die auf der lichtemittierenden Fläche auftretende Leuchtdichteverteilung nicht konstant. Dies kann sich beispielsweise aufgrund von Materialtoleranzen im Diffusor, einer nicht-deterministischen Verteilung der Streupartikel, einer Toleranz der LED-Elemente und Abweichungen zwischen der Position von Lichtquelle und Diffusor zueinander ergeben. Somit lässt sich zunächst feststellen, dass es derzeit nicht möglich ist, eine Lichtanimation auf einer Projektionsfläche darzustellen, welche einem vorgegebenen photometrischen Parameter entspricht. Der photometrische Parameter kann zum Beispiel eine Leuchtdichte der emittierenden Fläche sein. Der photometrische Parameter kann auch eine Lichtstärkeverteilung einer lichtemittierenden Vorrichtung bedeuten.

Insbesondere im Bereich der Schlussleuchten für Kraftfahrzeuge ist es erforderlich, dass die jeweilige Schlussleuchte eine vorgegebene Lichtstärke ausstrahlt. Dies ergibt sich vor allem aufgrund gesetzlicher Regelungen. Dennoch besteht der Wunsch beziehungsweise das Bedürfnis, trotz dieses vorgegebenen photometrischen Parameters unterschiedliche Lichtanimationen mittels einer Leuchtvorrichtung eines Kraftfahrzeugs, beispielsweise mit einer Heckleuchte zu erzeugen.

In diesem Zusammenhang offenbart die WO 2016/001936 A2 A2 ein Fahrtrichtungsignalisiergerät für ein Kraftfahrzeug. Die DE 10 2005 001 122 A1 offenbart ein Anzeigesystem für Fahrzeuge. Die US 4,556,862 offenbart ein Fahrzeugrichtungssignal- und Langsamwarnsystem, welches Bewegungsmuster von simultan eingeschalteten Lampen bereitstellt. Schließlich offenbart die GB 2 554 103 A eine programmierbare Rückleuchte für kommerziell genutzte Fahrzeuge.

Es ist Aufgabe dieser Erfindung, eine Leuchtvorrichtung bereitzustellen, mittels derer eine Lichtanimation ermöglicht werden kann, wobei dennoch ein vorgegebener photometrischer Parameter der Leuchtvorrichtung eingehalten wird.

Diese Aufgabe wird gemäß den unabhängigen Ansprüchen dieser Anmeldung gelöst. Sinnvolle Weiterbildungen und alternative Ausführungsformen sind in den Unteransprüchen, der Beschreibung und in den Figuren gegeben.

Die Erfindung sieht eine Leuchtvorrichtung für ein Kraftfahrzeug zum Erzeuge einer Lichtanimation vor. Die Lichtanimation kann zusätzlich oder alternativ ausgegeben oder dargestellt werden. Die Leuchtvorrichtung weist eine Lichtemissionsvorrichtung zum Erzeugen oder Darstellen der Lichtanimation auf. Ist die Leuchtvorrichtung zum Beispiel als Schlussleuchte ausgebildet, so dient die Schlussleuchte dazu, das Kraftfahrzeug und seine Breite nach hinten anzuzeigen. Dabei ist die Lichtemissionsvorrichtung in mehrere Segmente unterteilt. Die mehreren Segmente können jeweils als Lichtquelle ausgebildet sein. Jedes einzelne Segment kann als eine separate Lichtquelle ausgebildet sein. Somit kann das jeweilige Segment Licht emittieren. Damit kann die Steuereinheit ausgebildet sein, die mehreren Segmente beziehungsweise jedes einzelne Segment separat anzusteuern. Durch das Ansteuern der Steuereinheit wird insbesondere der photometrische Parameter des jeweiligen Segments angepasst oder verändert. Damit kann die Steuereinheit die jeweiligen Segmente bezüglich ihrer Leuchtdichte oder Helligkeit anpassen. Die Steuereinheit kann somit eines oder mehrere Segmente unterschiedlich leuchten lassen. Beispielsweise kann die Lichtemissionsvorrichtung in mehrere gleich große quadratische Flächen aufgeteilt sein. Die jeweiligen Segmente können in ihrer Form und Fläche identisch oder unterschiedlich sein. So können eckige, runde, ovale, dreieckige oder beliebig geformte Segmente vorgesehen sein. Darüber hinaus können die jeweiligen Segmente zusätzlich in ihrer Größe unterschiedlich sein.

Die Leuchtvorrichtung weist eine Steuereinheit auf, welche ausgestaltet ist, jedes der mehreren Segmente der Lichtemissionsvorrichtung separat anzusteuern. Dies bedeutet insbesondere, dass die Steuereinheit jedes der mehreren Segmente unterschiedlich ansteuern kann. Mit Ansteuern ist insbesondere eine Beaufschlagung der jeweiligen Segmente mit einem Stromfluss und/oder einer Spannung gemeint. Dadurch wird insbesondere die Lichtstärke oder die Leuchtdichte der jeweiligen Segmente beeinflusst.

Die Steuereinheit ist ausgestaltet, die mehreren Segmente jeweils zu mehreren Zeitpunkten bezüglich eines photometrischen Parameters betreffend das jeweilige Segment unterschiedlich ansteuern oder regeln, um die Lichtanimation zu erzeugen. Der photometrische Parameter kann einen Wert für das jeweilige Segment beinhalten. Der photometrische Parameter kann einen Wert für die Lichtstärke aufweisen. Damit kann für jedes einzelne Segment ein separater Wert für den photometrischen Parameter angegeben werden. Beispielsweise sind alle Segmente identisch und weisen dieselbe Leuchtdichte von beispielsweise 5 cd/m² auf. In diesem Fall hat jedes Segment denselben Wert bezüglich der Leuchtdichte. Der Begriff Lichtanimation ist insbesondere mit der zeitlich unterschiedlichen Ansteuerung der Segmente der Lichtemissionsvorrichtung verknüpft. Dies kann man als "Segmentzustand" zum jeweiligen Zeitpunkt betrachten. Unterschiedlichen Segmentzustände zu verschieden Zeitpunkten ergeben insbesondere die Lichtanimation. Eine jeweilige Ansteuerung der Segmente hinsichtlich des photometrischen Parameters kann als "Lichtverteilung" bezeichnet werden.

Die Steuereinheit kann die Leuchtdichte oder Lichtstärke der jeweiligen Segmente mittels einer Regelung des Stromflusses anpassen, steuern und/ oder regeln. Eine entsprechende Pulsweitenmodulation der einzelnen Segmente ist möglich. Die Steuereinheit kann je nach Ansteuerung jedes einzelne Segment der mehreren Segmente mit einer unterschiedlichen Stromstärke oder Spannung beaufschlagen. Damit kann die Steuereinheit jedes Segment mit einem anderen Wert bezüglich des photometrischen Parameters einstellen. Mittels der Leuchtvorrichtung können mehrere Lichtanimationen dargestellt werden.

Die Leuchtvorrichtung eine oder mehrere Lichtfunktionen aufweisen. Die Lichtfunktion kann beispielsweise ein Fernlicht, ein Bremslicht, ein Blinklicht, ein Schlusslicht und/oder ein Projektionslicht sein. Damit kann die Leuchtvorrichtung als Scheinwerfer, Blinker und/oder Heckleuchte ausgebildet sein.

Die Steuereinheit ist ferner dazu ausgebildet, die mehreren Segmente derart anzusteuern, dass der photometrischer Parameter der Leuchtvorrichtung gemittelt über alle Segmente für die Lichtanimation innerhalb eines vorgegebenen Intervalls liegt. Der photometrische Parameter kann insbesondere konstant sein. Damit kann das vorgegebene Intervall einen konstanten Wert repräsentieren. "Konstant" kann bedeuten, dass ein Wert für den photometrischen Parameter, beispielsweise ein Wert für eine Lichtstärke oder ein Wert für eine Leuchtdichte, nicht stets exakt dem konstanten Wert entspricht, sondern im Rahmen einer technischen Realisierbarkeit um den konstanten Wert schwanken kann. Zum Beispiel kann eine Schwankung von 1, 2, 3, 4, 5, 6, 7, 8, 9 oder 10 % um den konstanten Wert immer noch den konstanten Wert bedeuten beziehungsweise den konstanten Wert repräsentieren. Somit kann es ausreichend sein, wenn der konstante Wert näherungsweise konstant ist.

Jedes Segment kann somit einen Beitrag zu dem photometrischen Parameter leisten. Der photometrische Parameter der Leuchtvorrichtung ist bevorzugt ein effektiver photometrischer Parameter, der durch eine Gesamtheit aller Segmente der Lichtemissionsvorrichtung erzeugt wird. Die Steuereinheit kann so ausgestaltet sein, eine jeweilige Stromstärke der jeweiligen Segmente derart zu regeln oder einzustellen, dass der Wert des photometrischen Parameters, insbesondere die Lichtstärke oder Leuchtdichte, der Leuchtvorrichtung gemittelt über alle Segmente innerhalb des vorgegebenen Intervalls liegt oder näherungsweise konstant ist. Einzelne Segmente können deaktiviert sein oder je nach Ansteuerung eine Leuchtdichte erzeugen, die unterhalb einer maximal möglichen Leuchtdichte für das betreffende Segment liegt. Somit ist es nicht erforderlich, dass jedes Segment denselben photometrischen Parameter beziehungsweise dessen Wert einhalten beziehungsweise erfüllen muss. Die mehreren Segmente können durch die Steuereinheit dynamisch verschiedenen Gruppen zugeordnet werden. Damit können sich verschiedene räumliche Verteilungen der Segmente ergeben. Die Segmente innerhalb der Gruppe können gleich angesteuert werden. So kann zum Beispiel in einer ersten Gruppe die Helligkeit der Segmente erhöht werden und die Segmente in einer zweiten Gruppe können verdunkelt werden, um eine Lichtanimation mit vorgegebener Lichtstärke oder Leuchtdichte zu erzeugen. Somit kann die Steuereinheit unterschiedliche Intensitätsverteilungen bezüglich des photometrischen Parameters für die Segmente oder Gruppen von Segmenten realisieren.

Eine Vielzahl beziehungsweise eine Gesamtheit der Segmente wird von der Steuereinheit bevorzugt so angesteuert, dass der effektive photometrische Parameter oder das dazugehörige vorgegebene Intervall eingehalten wird. Die Steuereinheit kann die Segmente zusätzlich oder alternativ zu der Ansteuerung regeln. Damit kann die Steuereinheit ausgebildet sein, die mehreren Segmente hinsichtlich ihrer Leuchtdichte oder Lichtstärke derart zu regeln, dass der photometrische Parameter der Leuchtvorrichtung gemittelt über alle Segmente für jede Lichtanimation innerhalb des vorgegebenen Intervalls liegt. Die Leuchtdichte der jeweiligen Segmente kann anhand einer jeweiligen Stromstärke, mit der die jeweiligen Segmente beaufschlagt werden, beeinflusst oder geregelt werden. Insbesondere kann die Steuereinheit auf Sensordaten zugreifen, welche in eine Regelung der Lichtstärke einfließen. Die Sensordaten können zum Beispiel Temperaturdaten oder Laufzeitdaten der Segmente sein. Mithilfe der Mittelung kann insbesondere der effektive photometrische Parameter für die Leuchtvorrichtung ermittelt beziehungsweise eingestellt werden.

Der Begriff photometrischer Parameter kann unterschiedliche Bedeutungen haben. Der photometrische Parameter kann beispielsweise eine Lichtstärke bedeuten. Eine Lichtstärke ist insbesondere ein Lichtstrom, der in einen bestimmten Raumwinkel entfällt. Somit kann die Lichtstärke als Lichtstrom pro Raumwinkel ausgedrückt werden. Dabei ist der Raumwinkel bevorzugt kein ebener zweidimensionaler Raumwinkel, sondern ein dreidimensionaler Raumwinkel, der in Steradiant angegeben wird. Die SI-Einheit für die Lichtstärke ist dabei Candela (cd). Insbesondere kann der photometrische Parameter sich ausschließlich auf die Lichtstärke beziehen. Gesetzliche Regelungen beziehungsweise Rechtsverordnungen, welche die Beleuchtung von Kraftfahrzeugen betreffen, schreiben zum Beispiel bei Schlussleuchten für Kraftfahrzeuge Werte bezüglich der Lichtstärke vor.

So erwähnt beispielsweise eine Rechtsvorschrift im Amtsblatt der Europäischen Union L285 vom 30. September 2014 eine Mindestlichtstärke bei Schlussleuchten von vier Candela. Da sich die gesetzlichen Vorgaben beziehungsweise Rechtsverordnungen auf die Lichtstärke beziehen, kann sich ebenso der photometrische Parameter der Schlussleuchte ebenfalls auf die Lichtstärke beziehen. Für andere Leuchtvorrichtung kann entsprechendes gelten.

Der Begriff photometrischer Parameter kann jedoch alternativ oder zusätzlich eine Leuchtdichte bedeuten. Eine Leuchtdichte kann als Lichtstrom interpretiert werden, der von einer Fläche ausgestrahlt wird. Somit ist die Einheit der Leuchtdichte Candela pro Quadratmeter (cd/m²), während die Lichtstärke die Einheit Candela (cd) hat. Die Leuchtdichte ist somit auf eine Fläche bezogen. Hinsichtlich dieser Fläche gibt es unterschiedliche Ansatzpunkte beziehungsweise Interpretationsmöglichkeiten. Im Rahmen dieser Anmeldung wird im Zusammenhang mit der Leuchtdichte stets jede Fläche verwendet, welche leuchtet beziehungsweise Licht emittiert. Dies sind insbesondere die jeweiligen Segmente der Lichtemissionsvorrichtung. Im Rahmen dieser Anmeldung wird nicht auf eine "scheinbare" Größe der Fläche oder eine gesehene Fläche abgestellt, welche von einem externen Bezugspunkt abhängig ist. Die Leuchtdichte im Rahmen dieser Anmeldung ist somit der Lichtstrom, der von der leuchtenden Fläche (Segmente der Lichtemissionsvorrichtung) ausgestrahlt wird. Zwar beziehen sich die gesetzlichen Regelungen beziehungsweise Verordnungen auf die Lichtstärke, jedoch wird das Leuchten beziehungsweise Abstrahlen von Licht der Leuchtvorrichtung mithilfe unterschiedlicher Leuchtdichten der jeweiligen Segmente technisch realisiert. Damit kann es vereinzelt sinnvoll sein, den photometrischen Parameter auf die Leuchtdichte der jeweiligen Segmente beziehungsweise der Lichtemissionsvorrichtung abzustellen.

Dabei wird jedoch bevorzugt jeweils jene Leuchtdichte der jeweiligen Segmente gewählt beziehungsweise eingestellt, sodass die vorgegebene Lichtstärke der Leuchtvorrichtung oder Schlussleuchte den gesetzlichen Vorschriften entspricht.

Aus demselben Grund kann der photometrische Parameter ebenfalls auf den Lichtstrom beziehungsweise auf eine Beleuchtungsstärke abgestellt werden. Die Beleuchtungsstärke kann als Lichtstrom verstanden werden, der auf einer beleuchteten Fläche auftrifft. Diese Fläche ist insbesondere eine Projektionsfläche, welche die Lichtanimation darstellt. Je mehr Licht beziehungsweise Lichtstrom von der Lichtemissionsvorrichtung zu der Projektionsfläche (Abschlussscheibe) abgestrahlt wird, desto höher ist die Beleuchtungsstärke. Im Rahmen dieser Anmeldung bezieht sich der Begriff photometrischer Parameter bevorzugt auf die Lichtstärke und/oder auf die Leuchtdichte.

Die Steuereinheit kann die Leuchtdichte jedes einzelnen Segments separat ansteuern beziehungsweise regeln, sodass der photometrische Parameter der Leuchtvorrichtung gemittelt über alle Segmente innerhalb eines vorgegebenen Intervalls liegt. Das vorgegebene Intervall weist einen unteren Wert und einen oberen Wert auf. Im Fall der Schlussleuchte als Leuchtvorrichtung beträgt der untere Wert 4 Candela. Der obere Wert ist 17 Candela. Damit ist es nicht zwingend nötig, dass die Lichtstärke der Schlussleuchte einen exakt vorbestimmten Wert einnimmt, sondern es ist möglich, dass der photometrische Parameter innerhalb des vorgegebenen Intervalls liegt. Dieses vorgegebene Intervall ist insbesondere im Rahmen von Zulassungen für Kraftfahrzeuge von Bedeutung. Somit verfolgt die Erfindung das Ziel, einer oder mehrere unterschiedliche Lichtanimationen oder Schlusslichtzustände darzustellen und dennoch zugleich die vorgegebenen Zulassungsvoraussetzungen (vorgegebener photometrischer Parameter innerhalb des Intervalls) zu erfüllen. Da der photometrische Parameter innerhalb des Intervalls liegen muss, spricht man häufig auch von einer "Korridor-Zulassung".

Die gesetzlichen Vorgaben beziehungsweise Rechtsvorschriften können weitere situationsbezogenen Vorschriften betreffend den photometrischen Parameter beinhalten. So kann beispielsweise für eine hochgesetzte Schlussleuchte eines Lastkraftwagens ein anderes vorgegebenes Intervall gelten als für Schlussleuchten eines Kraftwagens. Dieser Umstand kann von der Steuereinheit bei der Ansteuerung der jeweiligen Segmente berücksichtigt werden. Damit kann eine Schlussleuchte für ein Kraftfahrzeug bereitgestellt werden, welche nicht nur den gesetzlichen Anforderungen genügt, sondern darüber hinaus erlaubt, mehrere Lichtfunktionen darzustellen. Damit können beispielsweise Informationen für Fußgänger bereitgestellt werden. Dies ist insbesondere eine für vollautonom fahrende Kraftfahrzeuge relevant. Auf diese Weise kann beispielsweise ein vollautonom fahrendes Kraftfahrzeug einem Fußgänger signalisieren, dass es beispielsweise rechtzeitig anhalten wird und der Fußgänger die Fahrbahn überqueren kann. Ebenso können für rückwärtige Fahrer von Kraftfahrzeugen Informationen bereitgestellt werden. Fährt beispielsweise ein rückwärtiges Kraftfahrzeug zu dicht auf das Kraftfahrzeug mit der erfindungsgemäßen Leuchtvorrichtung in Form der Schlussleuchte auf, so kann dem rückwärtigen Fahrer dezent eine Information übermittelt werden, die besagt, dass der Abstand zwischen den beiden Kraftfahrzeugen zu gering ist. Je nach entsprechender Lichtfunktion kann eine entsprechende Information bereitgestellt werden. Damit ist es möglich, mithilfe der Leuchtvorrichtung neue optische Effekte zu generieren und eine Fahrzeugbeleuchtung mit hochwertiger Anmutung zur Verfügung zu stellen.

Es ist vorgesehen, dass die Steuereinheit ausgestaltet ist, einen Teil der mehreren Segmente zu ermitteln, der eine geschlossene Kurve bildet. Es kann vorgesehen sein, dass die Steuereinheit einen Teil der mehreren Segmente ermittelt, deren abgestrahltes Licht eine geschlossene Kurve auf der Abschlussscheibe bildet. Die geschlossene Kurve kann beispielsweise ein Kreis, ein Rechteck oder ein Dreieck sein. Die genannten Formen als geschlossene Kurve können dabei aufgrund einer Wölbung der Abschlussscheibe ebenfalls gewölbt oder gekrümmt sein. Diese geschlossene Kurve kann als umschreibende Fläche bezeichnet werden, mittels derer ein Rahmen für die Lichtanimation vorgegeben wird. Dies kann dabei helfen, die Lichtanimation besser wahrzunehmen. Dabei ist vorgesehen, dass der Teil der mehreren Segmente, dessen abgestrahltes Licht die geschlossene Kurve bildet, stets eine konstante Leuchtdichte erzeugt. Die konstante Leuchtdichte des Teils der mehreren Segmente ist bevorzugt zeitlich konstant. So kann ein statischer Rahmen erzeugt werden, innerhalb dessen die Lichtanimation ausgegeben, erzeugt oder dargestellt werden kann. Dabei wird die Leuchtdichte der jeweiligen Segmente insbesondere derart modifiziert und angesteuert, sodass auf der Abschlussscheibe oder der Lichtemissionsvorrichtung eine durchgehende geschlossene Kurve oder Rechteck mit konstanter Helligkeit erzeugt wird. Die Kurve oder das Rechteck können dabei aufgrund einer vorgegebenen Wölbung der Abschlussscheibe ebenfalls gewölbt sein.

Darüber hinaus ist vorgesehen, dass die Steuereinheit ausgestaltet ist, eine jeweilige erste Leuchtdichte jener Segmente, welche der geschlossenen Kurve zugeordnet sind, konstant zu halten, und eine zweite jeweilige Leuchtdichte jener Segmente, welche einem Innenbereich der geschlossenen Kurve zugeordnet sind, für verschiedene Lichtfunktionen zu variieren. Anstelle der jeweiligen Leuchtdichte der Segmente kann die jeweilige Lichtstärke der Segmente konstant gehalten beziehungsweise variiert werden. Insbesondere kann die erste beziehungsweise zweite Leuchtdichte sich auf die Abschlussscheibe beziehen. In diesem Fall kommt es demnach nicht darauf an, welche Leuchtdichte oder Lichtstärke das jeweilige Segment aufweist, sondern auf die emittierte Lichtstärke der Lichtanimation. Somit kann diese Ausführungsform vorsehen, dass die erste beziehungsweise zweite Leuchtdichte sich je nach Anwendungsfall auf die jeweiligen Segmente oder auf die Abschlussscheibe bezieht. Beispielsweise weisen die zur geschlossenen Kurve zugeordneten Segmente eine höhere Leuchtdichte als die dem Innenbereich der geschlossenen Kurve zugeordneten Segmente auf. Die in der vorigen Ausführungsform genannten Vorteile und Beispiele gelten sinngemäß für diese Ausführungsform.

Weiterhin ist vorgesehen, dass die Steuereinheit ausgestaltet ist, eine Ansteuerungsfunktion, und zwar eine mittels eines Zufallsgenerators erzeugte Zufallsfunktion, zum Ansteuern der jeweiligen Segmente einzusetzen, wobei die Ansteuerungsfunktion beschreibt, welches Segment zu welchem Zeitpunkt welche Leuchtdichte aufweisen soll. Die Ansteuerungsfunktion kann sich auf die Lichtstärke beziehen. Die unterschiedlichen Ansteuerungsfunktionen werden oft als Kennlinien bezeichnet. Diese Kennlinien können linear, quadratisch, sinusförmig, ein Polynom sein oder eine sonstige mathematische Funktion als Grundlage haben. Eine Linearkombination dieser genannten mathematischen Funktionen für die Ansteuerungsfunktion ist möglich. Insbesondere kann für jedes einzelne Segment oder eine unterschiedliche Ansteuerungsfunktion vorgesehen sein. Eine Teilmenge der Segmente kann mit derselben Ansteuerungsfunktion gesteuert oder geregelt werden.

Eine weitere zusätzliche oder alternative Ausführungsform sieht eine Leuchtvorrichtung mit einer Abschlussscheibe vor, welche als Projektionsfläche der Leuchtvorrichtung für das Erzeugen, Ausgeben oder Darstellen der Lichtanimation eingerichtet sein kann. Die Abschlussscheibe ist in der Regel in Richtung der Lichtstrahlen angeordnet, welche durch die Lichtemissionsvorrichtung emittiert werden. Bevorzugt ist die Abschlussscheibe transparent ausgebildet. Die Abschlussscheibe kann zusätzlich oder alternativ als Abschirmelement zum teilweisen Abschirmen der Lichtemissionsvorrichtung gegenüber deren Umgebung ausgebildet sein. Die Abschlussscheibe in diesem Fall nicht nur einer Abschirmung der Lichtemissionsvorrichtung gegenüber Umwelteinflüssen (beispielsweise Feuchtigkeit und Verschmutzung), sondern kann zusätzlich als optisches Element eingerichtet sein. Beispielsweise kann mithilfe der Abschlussscheibe eine Richtung der von der Lichtemissionsvorrichtung emittierten Lichtstrahlen abgeändert werden. Dieses gelingt beispielsweise dadurch, indem die Abschlussscheibe einen entsprechenden Brechungsindex aufweist. Dies kann zusätzliche Freiheitsgrade hinsichtlich der Anordnung und Geometrie der jeweiligen Segmente der Lichtemissionsvorrichtung ermöglichen. So können beispielsweise die Segmente schräg angeordnet werden und zunächst ihre jeweiligen Lichtstrahlen in einem sonst unüblichen Winkel aussenden. Mithilfe der Abschlussscheibe können diese zu schräg emittierten Lichtstrahlen hinsichtlich ihrer Ausbreitungsrichtung so abgeändert werden, dass das emittierte Licht der Leuchtvorrichtung für andere Verkehrsteilnehmer wieder gut sichtbar ist. Somit kann die Abschlussscheibe beispielsweise ein aufgefächertes Lichtbündel zu fokussieren. Die Lichtanimation kann auf der Abschlussscheibe angezeigt beziehungsweise präsentiert werden. Jedoch kann die Lichtanimation auch ohne Abschlussscheibe dargestellt werden. Damit kann mittels der Leuchtvorrichtung eine Kommunikation mit anderen Verkehrsteilnehmern ermöglicht werden, wobei dennoch die gesetzlichen Vorgaben eingehalten werden.

Eine weitere zusätzliche oder alternative Ausführungsform sieht eine Leuchtvorrichtung vor, wobei die Lichtemissionsvorrichtung eine OLED mit mehreren Segmenten aufweist, oder die Lichtemissionsvorrichtung mehrere LED-Elemente als die mehreren Segmente mit einem optischen Element aufweist. Mithilfe des optischen Elements kann eine homogene Flächenlichtquelle zu erzeugt werden. Damit kann inhomogenes Licht mittels des optischen Elements in homogenes Licht transformiert werden, sodass der Eindruck einer homogenen Flächenlichtquelle entsteht. Der Begriff OLED (englisch: organic light emitting diode) wird meist als Abkürzung für den Betriff der organischen Leuchtdiode verwendet. Die OLED ist insbesondere ein leuchtendes Dünnschichtbauelement, welches aus organischen halbleitenden Materialien gefertigt ist. LED-Elemente sind insbesondere anorganische Leuchtdioden. OLED-Lichtquellen haben sich bereits so weiterentwickelt, dass OLED-Lichtquellen im Bereich der Fahrzeugtechnik Anwendung finden können. OLEDs eignen sich für diese Erfindung besonders gut, da mithilfe von OLEDs homogene Flächenlichtquellen bereitgestellt werden können. Eine Lichtemissionsvorrichtung, die ein oder mehrere OLED-Elemente aufweist, ist in der Lage, ein homogenes Flächenlicht zu erzeugen.

Ein solches homogenes Flächenlicht kann mit LED-Elementen in Kombination mit dem optischen Element erzeugt werden. So kann ein nicht homogenes Flächenlicht der mehreren LED-Elemente mithilfe des optischen Elements in ein homogenes Flächenlicht umgewandelt werden. In besonders vorteilhaften Ausführungen ist die OLED als Lambertscher Emitter ausgestaltet. In diesem Fall ist die Leuchtdichte und das Abstrahlverhalten jedes der mehreren Segmente der OLED identisch. Das Abstrahlverhalten bezieht sich hierbei insbesondere auf eine Winkelverteilung des emittierten Lichts. So können sowohl OLEDs als auch gewöhnliche LED-Elemente verwendet werden, um eine homogene Flächenlichtquelle bereitzustellen. Mithilfe einer homogenen Flächenlichtquelle kann die Lichtanimation leichter erzeugt und dargestellt werden.

Mit dem Begriff Lichtfunktion ist insbesondere eine jeweilige Lichtapplikation an einem Kraftfahrzeug gemeint. Beispielsweise stellen das Schlusslicht, ein Bremslicht, ein Fernlicht oder ein Abblendlicht verschiedene Lichtfunktionen dar. Hinsichtlich des Schlusslichts kommt bevorzugt eine Lichtanimation aus mehreren Lichtverteilungen oder Segmentzuständen zum Einsatz. Die mehreren Segmentzustände zu unterschiedlichen Zeitpunkten ergeben dabei die Lichtanimation. Mit Lichtanimation können mehrere Lichtverteilungen in einem vorgegebenen Zeitintervall angesprochen sein. Es können mehrere Lichtanimationen erzeugt werden. Die Lichtanimation kann auf einer Projektionsfläche, beispielsweise der Abschlussscheibe, erzeugt oder dargestellt werden. Die Abschlussscheibe kann als transparentes Abschirmelement ausgebildet sein. In diesem Fall ist die Lichtanimation beziehungsweise die Lichtfunktion direkt sichtbar und es wird insbesondere keine Lichtanimation auf die Abschlussscheibe projiziert. Das Zeitintervall kann mehrere Zeitpunkte beinhalten. Zu jedem dieser Zeitpunkte kann eine andere Lichtverteilung vorgesehen sein. Die Lichtverteilungen können dabei nicht nur von der Zeit, sondern zusätzlich vom Ort, nämlich einer jeweiligen Stelle auf der Projektionsfläche, abhängig sein. Insbesondere kann die Lichtanimation anstelle auf der Projektionsfläche direkt auf einer Oberfläche der jeweiligen Segmente dargestellt werden. In diesem Fall entspricht die Oberfläche der jeweiligen Segmente der Projektionsfläche.

Eine weitere zusätzliche oder alternative Ausführungsform sieht vor, dass in einer vorgegebenen Standard-Betriebssituation die mehreren Segmente innerhalb eines vorgegebenen Toleranzniveaus jeweils dieselbe Leuchtdichte und dieselbe Abstrahlcharakteristik aufweisen. Dies trifft insbesondere auf homogene Flächenlichtquellen zu. Die Abstrahlcharakteristik beschreibt insbesondere, wie viel Licht, das heißt wie viel Lichtstrom, durch ein vorgegebenes Flächensegment oder einen vorgegebenen Raumwinkel abgestrahlt wird. Bisherige homogene Flächenlichtquellen gelten insbesondere bereits als homogene Flächenlichtquellen, wenn die Leuchtdichte um höchstens 10 % von dem dazugehörigen Mittelwert abweicht. Diese Ausführungsform sieht insbesondere vor, dass das vorgegebene Toleranzniveau maximal 2 % beträgt. Dieses reduzierte Toleranzniveau kann mittels der separaten Ansteuerung der mehreren Segmente erreicht werden. Dies bedeutet, dass die Leuchtdichte um maximal 2 % um den Mittelwert der Leuchtdichte der Lichtemissionsvorrichtung schwankt. Dieses Kriterium gilt dabei bevorzugt für jedes einzelne Segment der Lichtemissionsvorrichtung. Dadurch können noch präzisere Lichtanimationen erzeugt oder dargestellt werden. Die bisher als homogen geltenden Flächenlichtquellen mögen zwar für das menschliche Auge homogen erscheinen, jedoch kann messtechnisch nachgewiesen werden, dass hierbei dennoch Schwankungen auftreten. Mithilfe der hier beschriebenen Leuchtvorrichtung können diese Schwankungen weiter reduziert werden. Dies kann dabei helfen, eine besser genormte Schlussleuchte für Kraftfahrzeuge bereitzustellen.

Eine weitere zusätzliche oder alternative Ausführungsform sieht vor, dass die Lichtemissionsvorrichtung als Lambertscher Emitter ausgestaltet ist. Ein Lambertscher Emitter ist insbesondere eine Lichtquelle, welches Licht nach dem Lambertgesetz ausstrahlt. Bei einer Lichtemissionsvorrichtung, die dem Lambertschen Gesetz folgt, ist die abgestrahlte Lichtstärke zwar von der Richtung der ausgestrahlten Lichtstrahlen abhängig, jedoch ist die resultierende Leuchtdichte richtungsunabhängig, also insbesondere winkelunabhängig. Eine Lichtemissionsvorrichtung, die als Lambertscher Emitter betrachtet werden kann, erleichtert die Ansteuerung der jeweiligen Segmente und somit das Erzeugen, Ausgeben oder Darstellen der Lichtanimation. Die Steuereinheit kann alle Segmente gleich ansteuern, um einen Lambertschen Emitter als Lichtemissionsvorrichtung zu realisieren. Die in dem vorhergehenden Ausführungsbeispiel genannten Vorteile gelten sinngemäß und analog für diese Ausführungsform.

Eine weitere zusätzliche oder alternative Ausführungsform sieht vor, dass die Leuchtvorrichtung mehrere Lichtemissionsvorrichtungen aufweist, wobei die Steuereinheit ausgebildet ist, die Lichtanimation der mehreren Lichtemissionsvorrichtungen in einem bestimmungsgemäßen Betrieb symmetrisch bezüglich einer vorgegebenen Symmetrieebene zu erzeugen. Insbesondere kann eine geradzahlige Anzahl von Lichtemissionsvorrichtungen vorgesehen sein. Diese geradzahlige Anzahl von Lichtemissionsvorrichtungen kann beispielsweise am Heck eines Kraftfahrzeugs angeordnet sein. Die vorgegebene Symmetrieebene ist insbesondere parallel zur vorgesehenen Projektionsfläche. Ein Teil der geradzahligen Lichtemissionsvorrichtungen kann auf einer Seite des Kraftfahrzeugs angeordnet sein und der andere Teil der geradzahligen Lichtemissionsvorrichtungen kann auf der gegenüberliegenden Seite des Kraftfahrzeugs angeordnet sein. Die vorgegebene Symmetrieebene kann insbesondere senkrecht zu einer vorgegebenen Hauptabstrahlrichtung der Lichtemissionsvorrichtungen sein. Im Fall des Kraftfahrzeugs können eine erste Lichtemissionsvorrichtung auf einer ersten und eine zweite Lichtemissionsvorrichtung auf einer zweiten Seite des Kraftfahrzeugs angeordnet sein. In diesem Fall wird das Heck des Fahrzeugs als Bezugspunkt gewählt. Die durch die erste und die zweite Lichtemissionsvorrichtung erzeugten und dargestellten Lichtanimationen sind bei dieser Ausführungsform zueinander symmetrisch bezüglich der Symmetrieebene. Somit kann ein weiterer Fahrer im rückwärtigen Raum des Kraftfahrzeugs die Lichtanimationen als symmetrisch wahrnehmen.

Eine weitere zusätzliche oder alternative Ausführungsform sieht vor, dass die Steuereinheit ausgestaltet ist, eine jeweilige Leuchtdichte einzelner oder mehrere Segmente, welche der geschlossenen Kurve zugeordnet sind, für einen vorgegebenen Zeitschritt konstant zu halten. In diesem Fall ist es möglich, dass nur ein Teil der geschlossenen Kurve leuchtet. In einem weiteren Zeitschritt können durch die Steuereinheit andere Segmente ausgewählt werden, die für den vorgegebenen Zeitschritt eine konstante Leuchtdichte aufweisen sollen.

Beispielsweise können zwei Segmente unterschiedliche Dimmrampen aufweisen. Eine Dimmrampe ist dabei insbesondere eine linear verlaufende Kennlinie. In diesem Fall können die Dimmrampen zueinander gegenläufig ausgebildet sein, sodass sich bezogen auf die gesamte Lichtemissionsvorrichtung stets dieselbe Lichtstärke ergibt. Im einfachen Fall von lediglich zwei Segmenten würde das erste Segment aufgehellt (z.B. Erhöhung der Stromstärke) werden, während hingegen das zweite Segment (z.B. Reduzieren der Stromstärke) um denselben Betrag verdunkelt wird. In Summe würde die ausgestrahlte Lichtstärke dieser beiden Segmente konstant bleiben. Dieses Prinzip für zwei einzelne Segmente lässt sich analog auf eine Lichtemissionsvorrichtung mit einer Vielzahl von Segmenten ausdehnen. Die dazugehörigen Ansteuerungsfunktionen können zeitlich beliebig wiederholt werden beziehungsweise als Endlos-Schleife ablaufen.

Ebenso ist es möglich, dass mehr als zwei Segmente und mehrere Helligkeitsstufen eingesetzt werden. Die Anzahl und Position der jeweiligen Segmente in der Lichtemissionsvorrichtung ist dabei insbesondere frei wählbar. Somit können Leuchtvorrichtungen mit mehreren 100 oder gar mehreren 1000 Segmenten eingesetzt werden. Insbesondere können die Segmente in Abhängigkeit von ihrer Größe, Position innerhalb der Lichtemissionsvorrichtung und/oder der jeweiligen Segmentform mit unterschiedlichen Helligkeiten angesteuert werden, um weiterhin die vorgegebene konstante Lichtstärke zu erzielen. Die jeweiligen Kennlinien beziehungsweise Ansteuerungsfunktionen der einzelnen Segmente können dabei dieselbe Steigung, eine unterschiedliche Steigung, eine gleichmäßige oder veränderliche Steigung aufweisen. Ebenso kann die Steigung der Kennlinie eines Teils der mehreren Segmente 0 betragen.

Mithilfe des Zufallsgenerators (deterministisches "Zufallsverhalten" / pseudo-Zufall) können Zufallsfunktionen als Ansteuerungsfunktion erzeugt werden. Diese Zufallsfunktionen erfüllen dabei insbesondere die Randbedingung, dass der vorgegebene photometrische Parameter eingehalten wird. Dadurch können weitere hochwertig anmutende Lichtanimationen mittels der Leuchtvorrichtung dargestellt werden. Je nach gewünschter Lichtanimation können sämtliche homologationsrelevanten Parameter der Lichtemissionsvorrichtung konstant gehalten werden und zugleich eine dynamische Lichtsignatur dargestellt werden. Die Lichtsignatur kann als die Lichtanimation verstanden werden. Mittels der Lichtanimation können auch (einfache) Symbole dargestellt werden. Dabei bleiben die photometrischen Parameter vorzugsweise zulassungsform konstant. Dies betrifft insbesondere analogstatische Lichtsignaturen. Beispielsweise können Schlusslichtsignaturen in der Fahrzeug-Heckbeleuchtung eingesetzt werden. Damit können dynamische Lichtanimationen realisiert werden, die besser erkennbar sind und eine höhere Aufmerksamkeit erzeugen, ohne dabei zusätzlich zu blenden wie herkömmliche Leuchten.

Eine weitere zusätzliche oder alternative Ausführungsform sieht vor, dass die Ansteuerungsfunktion derart durch die Steuereinheit ermittelt wird, sodass ein Lichtschwerpunkt bei der Darstellung der jeweiligen Lichtanimation verschoben wird. Der Lichtschwerpunkt kann analog wie ein gravitativer Schwerpunkt definiert werden. Dabei beeinflusst insbesondere die jeweils anliegende Helligkeit an dem leuchtenden Segment die Lage des Lichtschwerpunkts. Die Lage des Lichtschwerpunkts kann insbesondere von der Anzahl und Verteilung der leuchtenden Segmente, dem jeweils anliegenden Helligkeitsgrad der leuchtenden Segmente sowie von deaktivierten, also dunklen Segmenten abhängig sein. Eine entsprechende Mittelung der Leuchtdichte über alle Segmente der Lichtemissionsvorrichtung unter Berücksichtigung einer Position der jeweiligen Segmente beziehungsweise zuordenbarer beleuchteter Flächensegmente auf der Abschlussscheibe führt dabei insbesondere zu dem Lichtschwerpunkt. Der Lichtschwerpunkt kann somit als ein mit der Helligkeit oder Leuchtdichte gewichtetes Mittel der jeweiligen Positionen der Segmente oder beleuchteten Flächensegmente aufgefasst werden. Zur Ermittlung des Lichtschwerpunkts können alle Segmente der Lichtemissionsvorrichtung oder nur ein Teil der Gesamtheit der Segmente berücksichtigt werden. Bei einem verschobenen Lichtschwerpunkt weisen mehrere Lichtverteilungen bevorzugt einen unterschiedlichen Lichtschwerpunkt auf.

Mittels eines Gewichtungsfaktors kann eine relative Leuchtdichte des jeweiligen Segments für die Ermittlung des Lichtschwerpunkts berücksichtigt werden. Bei einem voll leuchtenden Segment würde ein Gewichtungsfaktor für die entsprechende Mittelung 1 betragen, bei einem deaktivierten Segment wäre der Gewichtungsfaktor 0. Da jede Lichtverteilung ihren eigenen Lichtschwerpunkt aufweisen kann, kann mithilfe unterschiedlicher Lichtverteilungen mit einem unterschiedlichen Lichtschwerpunkt dieser Lichtschwerpunkt verschoben werden. So kann beispielsweise ein von außen nach innen verlaufender Lichtschwerpunkt einem anderen Verkehrsteilnehmer eine Gefahrensituation signalisieren.

Eine weitere zusätzliche oder alternative Ausführungsform sieht vor, dass die Steuereinheit ausgestaltet ist, die jeweiligen Segmente in Abhängigkeit von einer vorgegebenen Leuchtdichte der Abschlussscheibe für die Lichtanimation zu steuern. Diese Ausführungsform sieht demnach vor, dass die Steuereinheit sich an einer vorgegebenen Leuchtdichte der Abschlussscheibe orientiert. Die Steuereinheit kann insbesondere eine vorgegebene Beleuchtungsstärkeverteilung auf der Abschlussscheibe realisieren. Dies gelingt beispielsweise dadurch, indem die Steuereinheit die jeweiligen Segmente so ansteuert, dass auf der Abschlussscheibe eine gewünschte beziehungsweise vorgegebene Beleuchtungsstärke realisiert wird. Bei dieser Ausführungsform wird auf die Leuchtdichte der Abschlussscheibe und nicht auf die Leuchtdichte der jeweiligen Segmente abgestellt. In diesem Fall wird der photometrische Parameter auf die Leuchtdichte der Abschlussscheibe bezogen. Im Zusammenhang mit den in den vorherigen Ausführungsformen genannten Beispiele und Vorteile gelten sinngemäß für diese Ausführungsform.

Eine weitere zusätzliche oder alternative Ausführungsform sieht vor, dass die Steuereinheit ausgestaltet ist, vorgegebene Segmente mit einer vorgegebenen Leuchtdichte für ein vorgegebenes Zeitintervall anzusteuern, wobei die Leuchtdichte während des vorgegebenen Zeitintervalls konstant gehalten wird. Die vorgegebenen Segmente können eine geometrische Figur bilden. Dies kann eine geometrische Figur auf der Oberfläche der Lichtemissionsvorrichtung oder auf der Abschlussscheibe sein. Beispielsweise kann die geometrische Figur ein Buchstabe, ein Zeichen oder ein Symbol sein. Jeder geometrischen Figur kann eine vorgegebene Information für einen nachfolgenden Verkehr zugeordnet werden. So kann eine Beschleunigung, ein Bremsen oder ein Abbiegen angezeigt oder mitgeteilt werden.

Eine weitere zusätzliche oder alternative Ausführungsform sieht vor, dass die Steuereinheit ausgestaltet ist, einen photometrischen Parameter jedes einzelnen Segments mittels einer Veränderung eines jeweiligen Stromflusses und/oder einer an das einzelne Segment anliegende jeweilige Spannung zu verändern, insbesondere mittels einer PWM-Dimmung einer Vielzahl der Segmente. Bei dieser Ausführungsform wird der photometrische Parameter der einzelnen Segmente verändert. Der photometrische Parameter bedeutet dabei insbesondere, wie zuvor beschrieben wurde, eine Leuchtdichte und/oder eine Lichtstärke. In dieser Ausführungsform können die einzelnen Segmente der Lichtemissionsvorrichtung beziehungsweise der OLED in Abhängigkeit von der gewünschten Leuchtdichte angesteuert werden. Die jeweilige Leuchtdichte jedes einzelnen Segments kann dabei mittels einer jeweiligen Stromstärke für das einzelne Segment angepasst werden. Damit kann eine einfache Ansteuerung mittels der Steuereinheit erzielt werden, da im Falle der OLED die Veränderung der Leuchtdichte relativ linear zur Veränderung der anliegenden Stromstärke ist. Vereinfacht kann davon ausgegangen werden, dass zwischen der Leuchtdichte des Segments und der beaufschlagten Stromstärke des Segments ein linearer Zusammenhang besteht.

Ebenso kann die Leuchtdichte beziehungsweise Helligkeit pro Segment durch eine Veränderung der an das jeweilige Segment anliegenden Spannung eingestellt werden. Insbesondere kann die anliegende Stromstärke modifiziert werden, um die Leuchtdichte des jeweiligen Segments einzustellen, zu beeinflussen oder zu regeln. Bei dieser Ausführungsform kann vorteilhaft ebenfalls eine Pulsweitenmodulation zum Einsatz kommen. In diesem Fall kann betreffend die Stromstärke oder die Spannung ein jeweiliger Tastgrad beziehungsweise Duty Cycle für die anliegende Stromstärke oder Spannung definiert werden. Bei der Pulsweitenmodulation kommt bevorzugt ein Rechtecksignal zum Einsatz. Dieses Rechtecksignal hat insbesondere zwei Werte, nämlich den Zustand 0 für ausgeschaltet und den Zustand 1 für eingeschaltet. Die jeweilige Zeitspanne für den Zustand 0 beziehungsweise Zustand 1 definiert dabei den Tastgrad beziehungsweise Duty Cycle. Mithilfe der Pulsweitenmodulation kann ebenfalls die Leuchtdichte für jedes einzelne Segment individuell eingestellt werden. Somit kann die Steuereinheit mithilfe der Pulsweitenmodulation beziehungsweise Pulsweitendimmung eine Vielzahl von Segmenten der Lichtemissionsvorrichtung in ihrer Leuchtdichte steuern.

Eine weitere zusätzliche oder alternative Ausführungsform sieht vor, dass die Leuchtvorrichtung einen Sensor zur Messung einer Temperatur oder einer Laufzeit der Lichtemissionsvorrichtung aufweist. Dabei ist die Steuereinheit ausgestaltet, die jeweiligen Segmente der Lichtemissionsvorrichtung zusätzlich in Abhängigkeit von der gemessenen Temperatur der Lichtemissionsvorrichtung und/oder der Laufzeit der Lichtemissionsvorrichtung anzusteuern oder zu regeln. Die Steuereinheit kann basierend auf den Sensordaten, insbesondere der gemessenen Temperatur und/oder Laufzeit, den photometrischen Parameter, insbesondere die Lichtstärke, Leuchtdichte oder Helligkeit, der Leuchtvorrichtung zu regeln. Die Temperatur der Lichtemissionsvorrichtung kann insbesondere eine gemittelte Temperatur der Lichtemissionsvorrichtung sein. Insbesondere kann die Temperatur jedes einzelnen Segments erfasst werden. Daraus kann eine Vielzahl von Temperaturwerten gewonnen werden, welche jeweils die Temperatur des dazugehörigen Segments anzeigen. Aus dieser Vielzahl von Temperaturwerten kann eine gemittelte Temperatur für die gesamte Lichtemissionsvorrichtung ermittelt werden.

Die Laufzeit der Lichtemissionsvorrichtung kann insbesondere beschreiben, seit wie vielen Zeiteinheiten die Lichtemissionsvorrichtung ununterbrochen in Betrieb ist beziehungsweise wie viele Zeiteinheiten seit ihrer Herstellung vergangen sind. Diese Zeiteinheiten sind dabei insbesondere Stunden, Tage beziehungsweise Jahre. Die Laufzeit kann beschreiben, wie viele Zeiteinheiten die Lichtemissionsvorrichtung in einem vorgegebenen Zeitraum in Betrieb war. Der Sensor zur Temperaturmessung kann beispielsweise mittels eines NTC-Widerstands oder NTC-Thermistors erfolgen. Bei dieser Art von Temperatursensoren kann mithilfe eines gemessenen Stromflusses auf eine dazugehörige Temperatur geschlossen werden. Damit kann die Steuereinheit Temperatureffekte sowie Alterungseffekte bei der Ansteuerung der jeweiligen Segmente berücksichtigen. Somit gelingt es, eine Leuchtvorrichtung bereitzustellen, die über ihre Lebensdauer hinweg die gesetzlichen Vorgaben erfüllen kann. Somit kann eine Leuchtvorrichtung mit der Fähigkeit, Lichtanimationen darzustellen, geschaffen werden, welche ein hohes Maß an Güte und Qualität erzielt.

Eine weitere zusätzliche oder alternative Ausführungsform sieht ein Kraftfahrzeug mit einer Leuchtvorrichtung gemäß einem der vorangegangenen Ausführungsformen vor. Die mit der Leuchtvorrichtung erzielbaren Lichtanimationen können zur Kommunikation mit anderen Verkehrsteilnehmern eingesetzt werden. Dabei kann eine höhere Aufmerksamkeit generiert werden, ohne dass eine schädliche Blendung der anderen Verkehrsteilnehmer hervorgerufen wird. Die in den vorangegangenen Ausführungsformen genannten Vorteile und Beispiele gelten sinngemäß für das Kraftfahrzeug mit der Leuchtvorrichtung. Die Leuchtvorrichtung kann mehrere Schlussleuchten oder mehrere andere Fahrzeugleuchten aufweisen.

Die Steuereinheit kann eine Prozessoreinrichtung aufweisen, die dazu eingerichtet ist, das Verfahrens oder eine der vorhergehenden Ausführungsformen durchzuführen. Die Steuereinheit kann Teil des Kraftfahrzeugs sein beziehungsweise das Kraftfahrzeug kann die Steuereinheit beinhalten. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung betrifft ebenfalls ein Verfahren zum Erzeugen einer Lichtanimation für eine Leuchtvorrichtung. Das Verfahren kann zusätzlich oder alternativ für ein Ausgeben oder Darstellen der Lichtanimation geeignet sein. Das Schlusslicht weist dabei eine Lichtemissionsvorrichtung auf, welche in mehrere Segmente unterteilt ist. Dieses Verfahren zeichnet sich durch ein separates Ansteuern der mehreren Segmente der Lichtemissionsvorrichtung aus, wobei die Ansteuerung derart erfolgt, dass ein photometrischer Parameter der Lichtemissionsvorrichtung innerhalb eines vorgegebenen Intervalls liegt. Die mehreren Segmente werden dabei jeweils zu mehreren Zeitpunkten bezüglich des photometrischen Parameters betreffend das jeweilige Segment unterschiedlich angesteuert. Dadurch wird insbesondere die Lichtanimation ausgegeben oder erzeugt. Die in den vorangegangenen Ausführungsformen dargestellten Beispiele und Vorteile gelten sinngemäß und analog für das dargestellte Verfahren und umgekehrt. Funktionelle Merkmale des Verfahrens können als entsprechende Vorrichtungsmerkmale betrachtet werden. Ebenso können Vorrichtungsmerkmale als entsprechende Verfahrensmerkmale betrachtet werden.

Die Erfindung wird nun anhand der beigefügten Figuren näher erläutert. Dabei ist zu beachten, dass die in den Figuren dargestellten Beispiele besonders bevorzugte Ausführungsbeispiele darstellen, welche jedoch nicht als Einschränkung für die Erfindung zu verstehen sind. Die Ausführungsbeispiele dienen insbesondere dazu aufzuzeigen, wie die Erfindung beispielhaft eingesetzt beziehungsweise verwirklicht werden kann.

Zu der Erfindung gehören Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Dabei zeigt:
- Fig. 1: eine beispielhafte Darstellung eines Kraftfahrzeugs mit einem Schlusslicht;
- Fig. 2: zwei Schlussleuchten als Leuchtvorrichtung mit jeweils unterschiedlicher Lichtemissionsvorrichtung;
- Fig. 3: zwei beispielhafte Segmente einer OLED-Lichtquelle mit entsprechender Ansteuerungsfunktion;
- Fig. 4: ein beispielhaftes Multisegmentsystem mit Segmenten mit konstanter Leuchtdichte;
- Fig. 5: eine beispielhafte Lichtanimation mit einem nach rechts verschobenen vertikalen Lichtschwerpunkt;
- Fig. 6: eine Lichtanimation mit einem horizontal verlaufenden Lichtschwerpunkt; und
- Fig. 7: ein beispielhaftes Verfahren für die Schlussleuchte.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

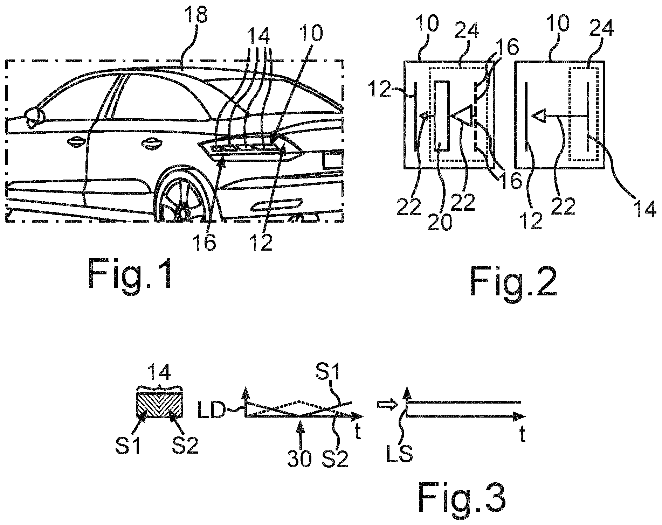

Fig. 1 zeigt beispielhaft ein Kraftfahrzeug 18, welches ein Schlusslicht 10 aufweist. In den Figuren ist die Leuchtvorrichtung 10 als Schlussleuchte 10 ausgebildet. Die Schlussleuchte 10 weist eine durchsichtige Abschlussscheibe 12 sowie eine Lichtemissionsvorrichtung 24 auf. Die Schlussleuchte 10 wird insbesondere für ein Schlusslicht als Lichtfunktion eingesetzt. Die Lichtemissionsvorrichtung 24 kann eine OLED 14 oder eine beziehungsweise mehrere LEDs 16 aufweisen. Im Beispiel von Fig. 1 weist die Lichtemissionsvorrichtung 24 sowohl mehrere LED-Elemente 16 sowie mehrere OLED-Elemente 14 auf. Die OLED 14 ist insbesondere eine homogene Flächenlichtquelle und kann in besonders vorteilhaften Ausführungen als Lambertscher Emitter ausgelegt werden. In diesem Fall sind die Leuchtdichte und das Abstrahlverhalten (Winkelverteilung) für jedes Flächenelement (Segment der OLED 14) identisch. Bevorzugt strahlt die Lichtemissionsvorrichtung 24 rotes Licht 22 aus.

Fig. 2 zeigt beispielhaft, wie mithilfe mehrerer LED-Elemente 16 eine Flächenlichtquelle erzeugt werden kann. Rechts in Fig. 2 weist die Lichtemissionsvorrichtung 24 lediglich die OLED 14 auf. Deren abgestrahltes Licht 22 ist vorzugsweise homogen. Das Licht 22 der OLED 14 trifft im weiteren Verlauf auf die Abschlussscheibe 12. Die Abschlussscheibe 12 kann einen von eins unterschiedlichen Brechungsindex aufweisen, um das Licht 22 beziehungsweise die Lichtstrahlen 22 hinsichtlich ihrer Ausbreitungsrichtung entsprechend abzuändern. Somit kann die Abschlussscheibe 12 als Linse ausgebildet sein. Das Licht 22 hat insbesondere eine Wellenlänge, welche als rotes Licht 22 wahrgenommen wird. Im linken Beispiel der Fig. 2 weist die Lichtemissionsvorrichtung 24 zwei Elemente auf. Die mehreren LED-Elemente 16 bilden dabei eine erste Einheit der Lichtemissionsvorrichtung 24. Eine zweite Einheit der Lichtemissionsvorrichtung 24 wird durch ein optisches Element 20 repräsentiert. Dieses optische Element 20 dient insbesondere dazu, aus dem abgestrahlten Licht 22 der mehreren LED-Elemente 16 eine homogene Flächenlichtquelle zu erzeugen.

Das von dem optischen Element 20 abgegebene Licht 22 entspricht dabei vorzugsweise jenem Licht, welches hinsichtlich der Abstrahlcharakteristik und Leuchtdichte mit der OLED 14 vergleichbar ist. Das optische Element 20 ist in Fig. 1 im Bereich der LED-Elemente 16 angeordnet. Da sowohl die Abschlussscheibe 12 als auch das optische Element 20 jeweils durchsichtig sind, kann das optische Element 20 in Fig. 1 nicht erkannt werden. Im Fall der Fig. 1 und 2 sind beide Lichtemissionsvorrichtungen 24 in einer Kfz-Heckleuchte mit der Abschlussscheibe 12 dargestellt. Die Kfz-Heckleuchte entspricht dabei dem Schlusslicht. Ist die Lichtemissionsvorrichtung 24 als OLED 14 ausgeführt, ermöglicht dies sehr feine Trennungen zwischen den einzelnen Segmenten.

Der Begriff OLED und der Begriff OLED-Lichtquelle können im Rahmen dieser Anmeldung als Synonyme verstanden werden. Die OLED 14 stellt somit eine spezielle Form einer Lichtquelle dar. Im Beispiel der Fig. 1 sind vier verschiedene OLEDs 14 zu erkennen. Dabei ist die am weitesten rechts angeordnete OLED 14 am größten ausgebildet. Diese rechte OLED 14 ist in etwa 15 Zentimeter lang und etwa 40 Millimeter hoch und weist drei Segmente Si auf. Es können jedoch auch OLEDs mit deutlich mehr Segmenten Si vorgesehen sein. So ist beispielsweise geplant, OLEDs 14 einzusetzen, welche eine Leuchtfläche von etwa 25 Quadratzentimeter aufweisen und in etwa 1000 Segmente Si unterteilt sind. Der Index i kennzeichnet dabei eine entsprechende Nummer des jeweiligen Segments.

In Fig. 3 ist beispielhaft eine einfache OLED 14 gezeigt, welche lediglich zwei Segmente Si aufweist. Die OLED 14 weist ein erstes Segment S1 und ein zweites Segment S2 auf. Zur Vereinfachung wird angenommen, dass die OLED 14 keine weiteren Segmente Si aufweist. Diese beiden Segmente S1 und S2 haben in diesem einfachen Beispiel dieselbe Größe und dieselbe Form. Diese beiden Segmente S1 und S2 können jedoch unterschiedliche Helligkeitsstufen, das heißt unterschiedliche Leuchtdichten LD, annehmen. Diese unterschiedlichen Leuchtdichten LD können mithilfe einer Steuereinheit 40 eingestellt werden. Im Beispiel von Fig. 3 ist das Segment S1 gegenüber dem Segment S2 etwas abgedunkelt. Diese Situation stellt einen Zustand zu einem vorgegebenen Zeitpunkt dar. Die mittlere Abbildung der Fig. 3 zeigt beispielhaft zwei mögliche Ansteuerungsfunktionen 30 beziehungsweise Kennlinien 30 für das erste und zweite Segment S1 und S2. Diese Ansteuerungsfunktion 30 beinhaltet auf einer x-Achse eine Zeit t und auf einer y-Achse die Leuchtdichte LD. Wie in Fig. 3 gut zu erkennen ist, sind die jeweiligen Kennlinien linear ausgebildet. Anstelle linearer Kennlinien 30 oder Ansteuerungsfunktionen 30 können komplexere Funktionen wie zum Beispiel Polynome oder Sinusfunktionen eingesetzt werden. Wie die Ansteuerungsfunktion 30 der Fig. 3 schematisch zeigt, wird zeitgleich das hellere Segment Sh abgedimmt und zeitgleich das dunklere Segment Sd mit einer gegenläufigen Kennlinie aufgehellt, sodass eine resultierende Lichtstärke LS der gesamten Lichtemissionsvorrichtung 24 konstant bleibt. In der vereinfachten Darstellung von Fig. 3 besteht die Lichtemissionsvorrichtung 24 lediglich aus dem ersten Segment S1 und dem zweiten Segment S2. Das Ergebnis der gegenläufigen Kennlinien 30 der in der Fig. 3 dargestellten Ansteuerungsfunktion 30 ist der in der Fig. 3 rechts dargestellte Verlauf der Lichtstärke LS. Der Verlauf der Lichtstärke LS ist dabei konstant und unterliegt keiner Schwankung.

Im Fall unterschiedlicher Flächenverhältnisse der jeweiligen Segmente Si können durch entsprechend angepasste Ansteuerungsfunktionen 30 kompensiert werden. Damit kann weiterhin eine konstante Lichtstärke LS der Lichtemissionsvorrichtung 24 erzielt werden. Die Ansteuerungsfunktionen 30 können zeitlich beliebig wiederholt werden beziehungsweise als Endlos-Schleife ablaufen.

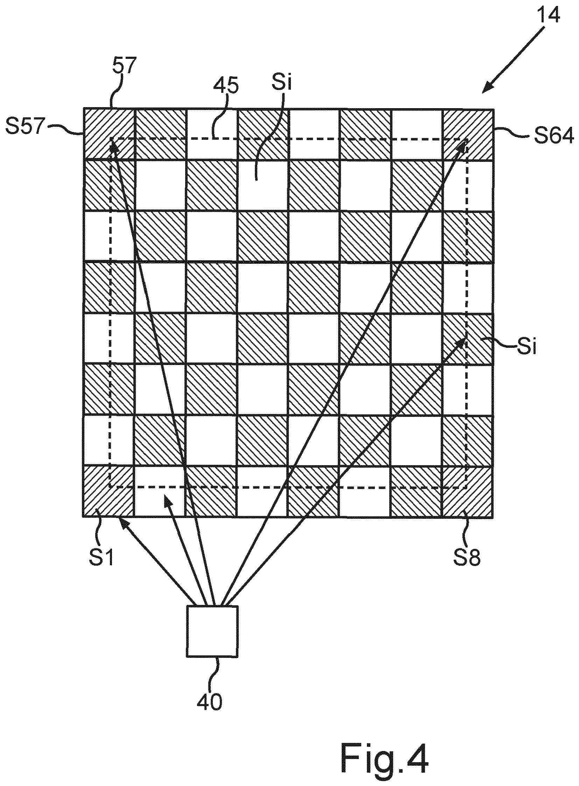

In Fig. 4 ist eine weitere Ausführung dargestellt, welche mehr als zwei Segmente aufweist und mehrere Helligkeitsstufen einsetzt. Im Fall von Fig. 4 steuert die Steuereinheit 64 Segmente Si an. Die Steuereinheit 40 kann sowohl das erste Segment S1, das 64. Segment S64 sowie alle dazwischenliegenden Segmente individuell und separat ansteuern. Im Beispiel der Fig. 4 weisen die Segmente S1, S8, S57 und S64 dieselbe Leuchtdichte LD auf. In diesem Fall sei angenommen, dass die jeweilige Leuchtdichte 100 Prozent des jeweiligen Segments beträgt und die jeweiligen der vier Segmente identisch sind. Diese vier Segmente S1, S8, S57 und S64 geben in Fig. 4 einen Rahmen 45 vor, innerhalb dessen die Lichtverteilungen, Segmentzustände beziehungsweise die Lichtanimation erzeugt werden können. Entgegen der Darstellung von Fig. 4 kann die Anzahl und Lage der einzelnen Segmente Si beliebig sein. Die jeweiligen Segmente Si werden in Abhängigkeit von ihrer Größe, Lage und/oder der Form der jeweiligen Segmente Si mit unterschiedlichen Leuchtdichten LD beaufschlagt, damit der vorgegebene photometrische Parameter LS, LD eingehalten wird. Dies ist insbesondere die gesetzlich vorgeschriebene Lichtstärke LS für die Schlussleuchte 10 des Kraftfahrzeugs 18.

Im Beispiel der Fig. 4 leuchten demnach die vier Randsegmente S1, S8, S57 und S64 mit derselben maximalen Leuchtdichte LD. Die übrigen Segmente Si dieser OLED 14 werden dabei von der Steuereinheit 40 in ihrer Leuchtdichte LD so eingestellt, dass die vorgegebene Lichtstärke LS eingehalten wird. Dies kann beispielsweise mithilfe entsprechender linearer Ansteuerungsfunktionen 30 geschehen, welche als Dimmrampen bezeichnet werden können. Zum Erzeugen weiterer Lichtanimationen beziehungsweise Lichtverteilungen kann ein Zufallsgenerator eingesetzt werden, der entsprechende Zufallsfunktionen zum Ansteuern der mehreren Segmente erzeugt. Jedoch erfüllt die so erzeugte Zufallsfunktion die Randbedingung, dass die durch die OLED 14 beziehungsweise die von der Schlussleuchte 10 emittierte Lichtstärke LS einen vorgegebenen Wert beziehungsweise deren Lichtstärkewert innerhalb eines vorgegebenen Intervalls liegt.

Jedes in der Fig. 4 dargestellte Segment mit Ausnahme der vier Randsegmente S1, S8, S57 und S64 kann mit einer eigenen Dimmrampe beziehungsweise einer eigenen Ansteuerungsfunktion von der Steuereinheit 40 angesteuert werden. Dies wird beispielsweise mithilfe eines veränderten Stromflusses beziehungsweise einer veränderten Spannung realisiert, welche an dem jeweiligen Segment Si anliegt. Die Leuchtdichte der Segmente Si beziehungsweise der vier Randsegmente kann zeitweise oder dauerhaft zwischen 0 % und 100 % der maximalen Leuchtdichte LD der Segmente liegen. Das Einstellen des Stromflusses beziehungsweise der anliegenden Spannung kann mithilfe einer Pulsweitenmodulation oder Pulsweitendimmung erfolgen. Anstelle der vier dargestellten Randsegmente kann eine Randkurve vorgegeben werden, welche den Rahmen 45 bildet. Dabei werden insbesondere jene Segmente Si der OLED 14 ausgewählt, welche zu einer geschlossenen Kurve auf der Abschlussscheibe 12 führen. Ein in Fig. 4 gezeigter gestrichelter Verlauf deutet einen möglichen Randbereich an, der den Rahmen 45 auf der Abschlussscheibe 12 darstellen kann. Die Segmente Si, die zu diesem Rahmen 45 gehören, können wie die Segmente S1, S57 und S64 mit derselben vorgegebenen Leuchtdichte LD leuchten. In diesem Fall wird vereinfacht angenommen, dass der in Fig. 4 dargestellte Rahmen 45 beziehungsweise die Eckpunkte ebenso ohne Verfälschung auf die Abschlussscheibe 12 projiziert werden. Die Steuereinheit 40 kann insbesondere eine Abbildungsvorschrift berücksichtigen, welche das von einem Segment Si abgestrahlte Licht 22 einem Flächensegment auf der Abschlussscheibe 12 zuordnet.

In einem weiteren Ausführungsbeispiel können die Randsegmente S1, S8, S57 und S64 ihre Leuchtdichte LD zeitlich variieren. Die Randsegmente S1, S8, S57 und S64 können demnach zu unterschiedlichen Zeitpunkten unterschiedlich stark leuchten. So kann eine Art "dynamischer Rahmen" ausgegeben werden, innerhalb dessen eine weitere Lichtanimation erzeugt oder dargestellt wird. Somit ist es zur Darstellung des Rahmens 45 nicht notwendig, dass Randsegmente S1, S8, S57 und S67 konstant leuchten müssen. Diese Randsegmente S1, S8, S57 und S67 können hinsichtlich ihrer Leuchtdichte LD veränderlich sein beziehungsweise entsprechend von der Steuereinheit 40 zu verschiedenen Zeitpunkten t mit unterschiedlichen Stromflüssen beaufschlagt werden, sodass entsprechend zeitlich variable Leuchtdichten LD resultieren.

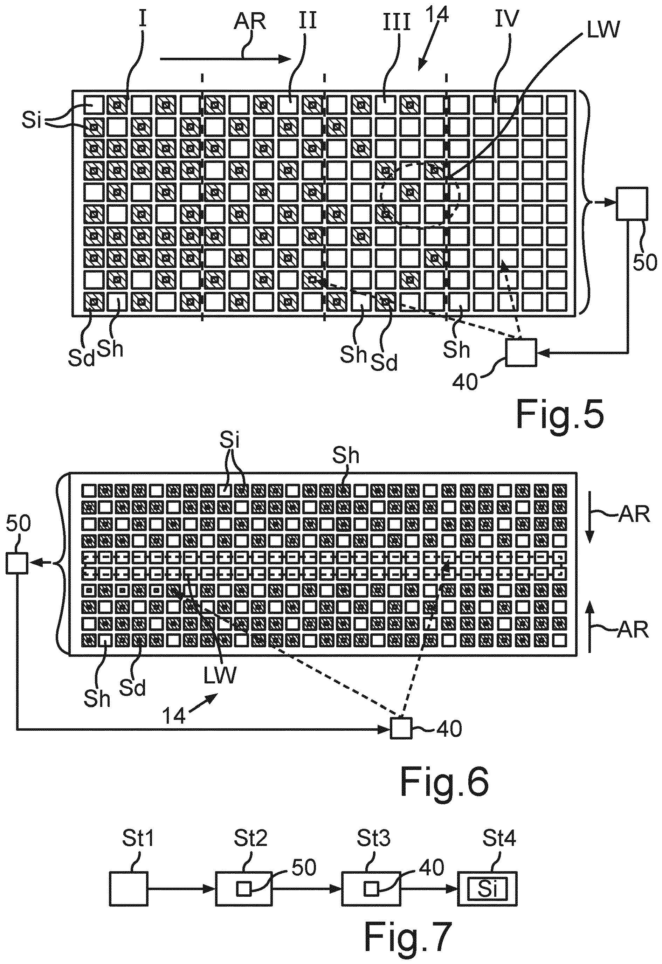

Fig. 5 zeigt beispielhaft eine Lichtanimation, bei der ein Lichtschwerpunkt LW nach rechts verschoben wird. Der Lichtschwerpunkt LW muss dabei kein einzelner Punkt oder ein einzelnes Segment Si sein. Der Lichtschwerpunkt LW kann, wie in Fig. 6 dargestellt ist, eine räumliche Ausdehnung aufweisen. In Fig. 5 sind die Segmente jeweils mit Sh oder Sd bezeichnet. Sh bedeutet dabei, dass es sich um ein helles Segment handelt, Sd bedeutet dabei, dass es sich um ein dunkles Segment handelt. Selbstverständlich sind zwischen Sh und Sd weitere Abstufungen bezüglich der Leuchtdichte LD möglich. Zur Vereinfachung werden jedoch solche Zwischenstufen vernachlässigt.

Die in Fig. 5 dargestellte OLED 14 ist in vier Bereiche aufgeteilt. Im Bereich I ist die Anzahl der dunklen Segmente gegenüber den anderen Bereichen am größten. Entsprechend ist die Anzahl der hellen Segmente Sh im ersten Bereich I gegenüber den anderen Segmenten Si am geringsten. Entlang einer Animationsrichtung AR ist deutlich zu erkennen, dass die Anzahl der hellen Segmente Sh pro Bereich zunimmt. Im zweiten Bereich II der OLED 14 hat sich bereits die relative Anzahl der hellen Segmente Sh gegenüber dem ersten Bereich I erhöht. Im vierten Bereich IV sind nur noch helle Segmente Sh zu erkennen. Dadurch wird bewirkt, dass der Lichtschwerpunkt LW nicht mittig auf der Fläche der OLED 14 beziehungsweise der Abschlussscheibe 12 angeordnet ist, sondern etwas nach rechts verschoben ist. Damit kann eine Lichtanimation erzeugt werden, deren Lichtschwerpunkt in Richtung der Animationsrichtung AR wandert. Dasselbe Prinzip kann auf das Beispiel der Fig. 6 übertragen werden. Im Fall der Fig. 6 ist der Lichtschwerpunkt nicht länger ein einzelner kleiner Bereich oder Punkt, sondern weist eine längliche Ausdehnung auf. Im Fall der Fig. 6 kann der Lichtschwerpunkt LW als eine Lichtlinie dargestellt werden. In Fig. 6 sind zwei gegenläufige Animationsrichtungen AR dargestellt. Diese gegensätzlichen Animationsrichtungen AR deuten an, dass ausgehend von dem oberen beziehungsweise unteren Ende der OLED 14 die Lichtstärke LS in Richtung einer Mitte der OLED 14 zunimmt. Die in den Fig. 5 und 6 dargestellten Veränderungen bezüglich des Lichtschwerpunkts LW können gezielt zur Informationsübertragung an andere Verkehrsteilnehmer genutzt werden. So kann beispielsweise eine Beschleunigung oder ein zu geringer Abstand dargestellt werden. Somit können weitere dynamische Lichtanimationen erzeugt werden, die besser erkennbar sind und eine höhere Aufmerksamkeit erzeugen, ohne dabei zusätzlich zu blenden, wie es oft bei herkömmlichen Leuchten der Fall ist. Gleichzeitig können gezielt bestimmte visuelle Effekte für andere Verkehrsteilnehmer erzeugt werden. Dies kann mithilfe einer entsprechenden Verschiebung des Lichtschwerpunktes LW, wie in den Fig. 5 und 6 dargestellt ist, erfolgen.

Die Fig. 5 und 6 zeigen beispielhaft einen Sensor 50. Dieser Sensor 50 kann insbesondere eine Temperatur der OLED 14 beziehungsweise eine Temperatur jedes einzelnen Segments Si erfassen beziehungsweise messen. Ebenso kann dieser Sensor 50 eine Laufzeit der OLED 14 beziehungsweise der Lichtemissionsvorrichtung 24 messen. Die Laufzeit beschreibt insbesondere eine Anzahl der Betriebsstunden der Lichtemissionsvorrichtung 24 beziehungsweise eine Zeitspanne, die seit der Herstellung der Lichtemissionsvorrichtung 24 vergangen ist. Mithilfe der gemessenen Temperaturen der jeweiligen Segmente Si beziehungsweise mithilfe einer gemittelten Temperatur für die gesamte Lichtemissionsvorrichtung 24 können etwaige Temperatureffekte der Lichtemissionsvorrichtung 24 bei der Ansteuerung der jeweiligen Segmente Si berücksichtigt werden. Mittels der Messung der Laufzeit können ebenso Alterungseffekte bei der Ansteuerung der jeweiligen Segmente Si berücksichtigt werden. Die Alterungseffekte können beispielsweise spezifische Widerstände in den Zuleitungen zu den jeweiligen Segmenten Si betreffen. Mithilfe dieser Zuleitungen können die jeweiligen Segmente Si mit Strom beziehungsweise Spannung beaufschlagt werden. Somit kann die Steuereinheit 40 Temperatureffekte und Alterungseffekte durch eine entsprechende Ansteuerung der jeweiligen Segmente Si berücksichtigen. So können Materialermüdungserscheinungen kompensiert werden und eine Schlussleuchte 10 geschaffen werden, deren Lebensdauer gesteigert werden kann. Die Temperatur der OLED 14 kann beispielsweise mithilfe einer NTC-Messung erfolgen. Die Geschwindigkeit der Lichtanimationen kann ebenfalls mithilfe der Steuereinheit 40 angepasst werden. Somit kann eine langsame Lichtanimation als auch eine schnellere Lichtanimation mit höherer Dynamik implementiert werden.

In Fig. 7 ist beispielhaft ein mögliches Verfahren für die Ansteuerung der jeweiligen Segmente Si gezeigt. Im ersten Schritt ST1 werden die notwendigen Komponenten für dieses Verfahren bereitgestellt. Dies betrifft vor allem die Steuereinheit 40 sowie die Lichtemissionsvorrichtung 24 mit den dazugehörigen Segmenten Si. In einem zweiten Schritt ST2 können beispielhaft mittels des Sensors 50 die Temperatur und/oder die Laufzeit der OLED 14 beziehungsweise der Lichtemissionsvorrichtung 24 gemessen werden. Diese Informationen beziehungsweise Werte werden zur Steuereinheit 40 übertragen. In einem dritten Schritt ST3 erzeugt die Steuereinheit 40 entsprechende Ansteuerungssignale für die jeweiligen Segmente Si. Dazu kann die Steuereinheit 40 entsprechende Ansteuerungsfunktionen 30 ermitteln. Mithilfe dieser Ansteuerungsfunktionen 30 können die jeweiligen Segmente Si in einem vierten Schritt St4 derart angesteuert werden, dass ihre jeweilige Leuchtdichte LD so verändert wird, dass daraus die entsprechende Lichtanimation hervorgeht. Dabei berücksichtigt die Steuereinheit 40, dass der photometrische Parameter der Schlussleuchte als Lichtemissionsvorrichtung 10 gemittelt über alle Segmente Si für die Lichtanimation innerhalb des vorgegebenen Intervalls liegt.

Wie in den Fig. 5 und 6 beispielhaft angedeutet ist, steuert die Steuereinheit 40 unterschiedliche Segmente Si an. In diesen beiden Figuren verlaufen je zwei gestrichelte Pfeile ausgehend von der Steuereinheit 40 zu einem jeweiligen Segment Si der OLED 14. Damit wird beispielhaft angedeutet, dass die Steuereinheit 40 jedes der einzelnen Segmente Si der OLED 14 ansteuern kann. Lediglich aus Gründen der Übersichtlichkeit wurden lediglich jeweils zwei gestrichelte Pfeile eingezeichnet.

Insgesamt zeigt die vorliegende Erfindung, dass Lichtanimationen mithilfe von segmentierten OLEDs 14 ausgeführt werden können. Ebenso können andere Flächenlichtquellen mit vergleichbaren technischen Eigenschaften zur OLED-Technologie eingesetzt werden. Die jeweiligen Segmente Si der OLED 14 werden dabei mithilfe des eingeprägten Stromflusses in ihrer Leuchtdichte LD eingestellt. Damit kann die Steuereinheit 40 jedes der einzelnen Segmente Si individuell ansteuern und so für jedes einzelne Segment Si eine eigene Leuchtdichte LD bereitstellen. die jeweiligen eingestellten Leuchtdichten LD werden dabei bevorzugt zeitlich verändert. Damit können neue dynamische Lichtanimationen erzeugt werden, welche gezielt für visuelle Effekte eingesetzt werden können. Beispielsweise kann mithilfe der Verschiebung des Lichtschwerpunkts LW anderen Verkehrsteilnehmern gezielt eine verkehrsrelevante Information mitgeteilt werden. Eine derartige Informationsübertragung ist besonders im Bereich vollautonom fahrender Kraftfahrzeuge 18 relevant.

## Patentansprüche

1. Leuchtvorrichtung (10) für ein Kraftfahrzeug (18) zum Erzeugen einer Lichtanimation, mit
- einer Lichtemissionsvorrichtung (24) zum Erzeugen der Lichtanimation, wobei die Lichtemissionsvorrichtung (24) in mehrere Segmente (Si) unterteilt ist und
- einer Steuereinheit (40), welche ausgestaltet ist,
* jedes der mehreren Segmente (Si) der Lichtemissionsvorrichtung (24) separat anzusteuern,
* die mehreren Segmente (Si) jeweils zu mehreren Zeitpunkten (t) bezüglich eines photometrischen Parameters (LD, LS) betreffend das jeweilige Segment (Si) unterschiedlich anzusteuern, um die Lichtanimation zu erzeugen und/oder auszugeben,
* die mehreren Segmente (Si) derart anzusteuern, dass der photometrischer Parameter (LD, LS) der Leuchtvorrichtung (10) gemittelt über alle Segmente (Si) für die Lichtanimation innerhalb eines vorgegebenen Intervalls liegt,
**dadurch gekennzeichnet, dass**
der photometrische Parameter (LD) eine Lichtstärke ist, wobei das vorgegebene Intervall einen unteren Wert, der 4 Candela beträgt, und einen oberen Wert aufweist, der 17 Candela beträgt, wobei die Steuereinheit (40) ausgestaltet ist, einen Teil der mehreren Segmente (Si) zu ermitteln, der eine geschlossene Kurve bildet, wobei die Steuereinheit (40) ausgestaltet ist, eine erste jeweilige Leuchtdichte (LD1) jener Segmente, welche der geschlossenen Kurve zugeordnet sind, konstant zu halten, und eine zweite jeweilige Leuchtdichte (LD2) jener Segmente, welche einem Innenbereich der geschlossenen Kurve zugeordnet sind, für die Lichtanimation zu variieren, wobei die Steuereinheit (40) ausgestaltet ist, eine Ansteuerungsfunktion (30), und zwar eine mittels eines Zufallsgenerators erzeugte Zufallsfunktion, zum Ansteuern der jeweiligen Segmente (Si) einzusetzen, wobei sich die Ansteuerungsfunktion (30) auf die Lichtstärke bezieht und die Ansteuerungsfunktion (30) beschreibt, welches Segment zu welchem Zeitpunkt (t) welche Leuchtdichte (LD) aufweist.

2. Leuchtvorrichtung (10) nach Anspruch 1 mit der Abschlussscheibe (12), welche als Abschirmelement zum teilweisen Abschirmen der Lichtemissionsvorrichtung (24) gegenüber deren Umgebung eingerichtet ist.

3. Leuchtvorrichtung (10) nach einem der vorhergehenden Ansprüche, wobei die Lichtemissionsvorrichtung (24) eine OLED (14) mit mehreren Segmenten (Si) aufweist, oder die Lichtemissionsvorrichtung (24) mehrere LED-Elemente (16) als die mehreren Segmente (Si) mit einem optischen Element (20) aufweist.

4. Leuchtvorrichtung (10) nach einem der vorhergehenden Ansprüche, wobei die Ansteuerungsfunktion (30) derart durch die Steuereinheit (40) ermittelt wird, sodass ein Lichtschwerpunkt bei dem Erzeugen der Lichtanimation verschoben wird.

5. Leuchtvorrichtung (10) nach einem der vorhergehenden Ansprüche, wobei die Steuereinheit (40) ausgestaltet ist, einen photometrischen Parameter (LS, LD) jedes einzelnen Segments (Si) mittels einer Veränderung eines jeweiligen Stromflusses und/oder einer an das einzelne Segment (Si) anliegende jeweilige Spannung zu verändern, insbesondere mittels einer PWM-Dimmung einer Vielzahl der Segmente (Si).

6. Leuchtvorrichtung (Si) nach einem der vorhergehenden Ansprüche mit einem Sensor (50) zur Messung einer Temperatur oder eine Laufzeit der Lichtemissionsvorrichtung (24), wobei die Steuereinheit (24) ausgestaltet ist, die jeweiligen Segmente (Si) der Lichtemissionsvorrichtung (24) zusätzlich in Abhängigkeit von der gemessenen Temperatur der Lichtemissionsvorrichtung und/oder der Laufzeit der Lichtemissionsvorrichtung (24) anzusteuern und/oder zu regeln.

7. Kraftfahrzeug (18) mit einer Leuchtvorrichtung (10) nach einem der vorhergehenden Ansprüche.

8. Verfahren zum Erzeugen einer Lichtanimation einer Leuchtvorrichtung (10) für ein Kraftfahrzeug, wobei die Leuchtvorrichtung (10) eine in mehrere Segmente (Si) unterteilte Lichtemissionsvorrichtung (24) aufweist, mit den Schritten:
- separates Ansteuern der mehreren Segmente (Si) der Lichtemissionsvorrichtung (24) derart, dass ein photometrischer Parameter (LS, LD) der Leuchtvorrichtung (10) innerhalb eines vorgegebenen Intervalls liegt, wobei die mehreren Segmente (Si) jeweils zu mehreren Zeitpunkten (t) bezüglich des photometrischen Parameters (LD, LS) betreffend das jeweilige Segment (Si) unterschiedlich angesteuert werden, um die Lichtanimation zu erzeugen und/oder auszugeben,
**dadurch gekennzeichnet, dass**
der photometrische Parameter (LD) eine Lichtstärke ist, wobei das vorgegebene Intervall einen unteren Wert, der 4 Candela beträgt, und einen oberen Wert aufweist, der 17 Candela beträgt, wobei ein Teil der mehreren Segmente (Si) ermittelt wird, der eine geschlossene Kurve bildet, wobei eine erste jeweilige Leuchtdichte (LD1) jener Segmente, welche der geschlossenen Kurve zugeordnet sind, konstant gehalten werden, und eine zweite jeweilige Leuchtdichte (LD2) jener Segmente, welche einem Innenbereich der geschlossenen Kurve zugeordnet sind, für die Lichtanimation variiert werden, wobei eine Ansteuerungsfunktion (30), und zwar eine mittels eines Zufallsgenerators erzeugte Zufallsfunktion, zum Ansteuern der jeweiligen Segmente (Si) eingesetzt wird, wobei sich die Ansteuerungsfunktion (30) auf die Lichtstärke bezieht und die Ansteuerungsfunktion (30) beschreibt, welches Segment zu welchem Zeitpunkt (t) welche Leuchtdichte (LD) aufweist.

## Claims

1. Lighting device (10) for a motor vehicle (18) for creating a light animation, having
- a light-emitting device (24) for creating the light animation, wherein the light-emitting device (24) is subdivided into several segments (Si) and
- a controller (40) which is configured
- to control separately each of the several segments (Si) of the light-emitting device (24),
- to control the several segments (Si) differently in each case at a plurality of points in time (t) by reference to a photometric parameter (LD, LS) relating to the respective segment (Si), in order to create and/or to output the light animation,
- to control the several segments (Si) such that the photometric parameter (LD, LS) of the lighting device (10) averaged across all segments (Si) for the light animation lies within a predetermined interval,
**characterised in that**
the photometric parameter (LD) is a light intensity, wherein the predetermined interval has a lower value which is 4 candela and an upper value which is 17 candela, wherein the controller (40) is configured to determine a subset of the several segments (Si) which forms a closed curve, wherein the controller (40) is configured to keep constant a first respective luminance (LD1) of those segments which are assigned to the closed curve and to vary for the light animation a second respective luminance (LD2) of those segments which are assigned to an inner region of the closed curve, wherein the controller (40) is configured to employ an actuation function (30), specifically a random function generated by means of a random generator, for controlling the respective segments (Si), wherein the actuation function (30) is related to the light intensity and the actuation function (30) describes which segment has which luminance (LD) at which point in time (t).

2. Lighting device (10) according to claim 1 with the end cover (12) which is aligned as a shielding element for the partial Shielding of the light-emitting device (24) with respect to its environment.

3. Lighting device (10) according to any of the preceding claims, wherein the light-emitting device (24) has an OLED (14) with several segments (Si), or the Light-emitting device (24) has more LED elements (16) than the several segments (Si) with an optical element (20).

4. Lighting device (10) according to any of the preceding claims, wherein the actuation function (30) is determined by the controller (40) such that a lighting focus in creating the light animation is moved.

5. Lighting device (10) according to any of the preceding claims, wherein the controller (40) is configured to alter a photometric parameter (LS, LD) of each individual segment (Si) by means of a change in a respective current flow and/or in a Respective voltage applied to the individual segment (Si), in particular by means of a PWM-dimming of a multiplicity of the segments (Si).

6. Lighting device (Si) according to any of the preceding claims having a sensor (50) for measuring a temperature or a running time of the light-emitting device (24), wherein the controller (24) is configured to control and/or to regulate the respective segments (Si) of the light-emitting device (24) in addition as a function of the measured temperature of the light-emitting device and/or the running time of the light-emitting device (24).

7. Motor vehicle (18) having a lighting device (10) according to any of the preceding claims.

8. Method for creating a light animation of a lighting device (10) for a motor vehicle, wherein the lighting device (10) has a light-emitting device (24) which is sub-divided into several segments (Si), having the steps:
- separately controlling the several segments (Si) of the light-emitting device (24) such that a photometric parameter (LS, LD) of the lighting device (10) lies within a predetermined interval, wherein the several segments (Si) are controlled differently in each case at several points in time (t) by reference to the photometric parameter (LD, LS) relating to the respective segment (Si), in order to create and/or output the light animation,
**characterised in that**
the photometric parameter (LD) is a light intensity, wherein the predetermined interval has a lower value which is 4 candela and an upper value which is 17 candela, wherein a subset of the several segments (Si) is determined which forms a closed curve, wherein a first respective luminance (LD1) of those segments which are assigned to the closed curve are kept constant, and a second respective luminance (LD2) of those segments which are assigned to an inner region of the closed curve are varied for the light animation, wherein an actuation function (30), specifically a random function generated by means of a random generator, is used to control the respective segments (Si), wherein the actuation function (30) is related to the light intensity and the actuation function (30) describes which segment has which luminance (LD) at which point in time (t).

## Revendications

1. Dispositif d'éclairage (10) pour un véhicule automobile (18) pour la génération d'une animation lumineuse, avec
- un dispositif d'émission de lumière (24) pour la génération de l'animation lumineuse, dans lequel le dispositif d'émission de lumière (24) est divisé en plusieurs segments (Si) et
- un dispositif de commande (40) qui est configuré
- afin de commander séparément chacun des plusieurs segments (Si) du dispositif d'émission de lumière (24),
- afin de commander différemment les plusieurs segments (Si) respectivement à plusieurs moments (t) par référence à un paramètre photométrique (LD, LS) concernant le segment respectif (Si) pour générer et/ou sortir l'animation lumineuse,
- afin de commander les plusieurs segments (Si) de telle manière que le paramètre photométrique (LD, LS) du dispositif d'éclairage (10) pondéré se situe dans un intervalle prédéfini sur tous les segments (Si) pour l'animation lumineuse,
**caractérisé en ce que**
le paramètre photométrique (LD) est une intensité lumineuse, dans lequel l'intervalle prédéfini présente une valeur inférieure qui s'élève à 4 candela, et une valeur supérieure qui s'élève à 17 candela, dans lequel l'unité de commande (40) est configurée afin de déterminer une partie des plusieurs segments (Si), qui forme une courbe fermée, dans lequel l'unité de commande (40) est configurée afin de maintenir constante une première luminance (LD1) respective de chaque segment qui est associé à la courbe fermée, et de varier une seconde luminance respective (LD2) de chaque segment qui est associé à une zone intérieure de la courbe fermée, pour l'animation lumineuse, dans lequel l'unité de commande (40) est configurée afin d'utiliser une fonction de commande (30), et ce une fonction aléatoire générée au moyen d'un générateur aléatoire, pour la commande des segments (Si) respectifs, dans lequel la fonction de commande (30) se rapporte à l'intensité lumineuse et la fonction de commande (30) décrit quel segment présente à quel moment (t) quelle luminance (LD).

2. Dispositif d'éclairage (10) selon la revendication 1 avec le disque terminal (12) qui est conçu comme élément de blindage pour le blindage partiel du dispositif d'émission de lumière (24) par rapport à son environnement.

3. Dispositif d'éclairage (10) selon l'une quelconque des revendications précédentes, dans lequel le dispositif d'émission de lumière (24) présente une OLED (14) avec plusieurs segments (Si), ou le dispositif d'émission de lumière (24) présente plusieurs éléments à DEL (16) comme les plusieurs segments (Si) avec un élément optique (20).

4. Dispositif d'éclairage (10) selon l'une quelconque des revendications précédentes, dans lequel la fonction de commande (30) est déterminée par le dispositif de commande (40) de telle manière qu'un centre de gravité lumineux soit déplacé lors de la génération de l'animation lumineuse.

5. Dispositif d'éclairage (10) selon l'une quelconque des revendications précédentes, dans lequel le dispositif de commande (40) est configuré afin de modifier un paramètre photométrique (LS, LD) de chaque segment individuel (Si) au moyen d'une modification d'un flux de courant respectif et/ou d'une tension respective appliquée au segment individuel (Si), en particulier au moyen d'une gradation PWM d'une pluralité des segments (Si).

6. Dispositif d'éclairage (Si) selon l'une quelconque des revendications précédentes avec un capteur (50) pour la mesure d'une température ou d'une durée du dispositif d'émission de lumière (24), dans lequel le dispositif de commande (24) est configuré afin de commander et/ou de réguler en outre les segments (Si) respectifs du dispositif d'émission de lumière (24) en fonction de la température mesurée du dispositif d'émission de lumière et/ou de la durée du dispositif d'émission de lumière (24).

7. Véhicule automobile (18) avec un dispositif d'éclairage (10) selon l'une quelconque des revendications précédentes.

8. Procédé de génération d'une animation lumineuse d'un dispositif d'éclairage (10) pour un véhicule automobile, dans lequel le dispositif d'éclairage (10) présente un dispositif d'émission de lumière (24) divisé en plusieurs segments (Si), avec les étapes suivantes :
- la commande séparée des plusieurs segments (Si) du dispositif d'émission de lumière (24) de telle manière qu'un paramètre photométrique (LS, LD) du dispositif d'éclairage (10) se situe dans un intervalle prédéfini, dans lequel les plusieurs segments (Si) sont commandés différemment respectivement à plusieurs moments (t) par référence au paramètre photométrique (LD, LS) concernant le segment respectif (Si) afin de générer et/ou de sortir l'animation lumineuse,
**caractérisé en ce que**
le paramètre photométrique (LD) est une intensité lumineuse, dans lequel l'intervalle prédéfini présente une valeur inférieure qui s'élève à 4 candela, et une valeur supérieure qui s'élève à 17 candela, dans lequel une partie des plusieurs segments (Si) est déterminée, laquelle forme une courbe fermée, dans lequel une première luminance (LD1) respective de chaque segment qui est associé à la courbe fermée, est maintenue constante, et une seconde luminance respective (LD2) de chaque segment qui est associé à une zone intérieure de la courbe fermée, est variée pour l'animation lumineuse, dans lequel une fonction de commande (30), et ce une fonction aléatoire générée au moyen d'un générateur aléatoire, pour la commande des segments (Si) respectifs est utilisée, dans lequel la fonction de commande (30) se rapporte à une intensité lumineuse et la fonction de commande (30) décrit quel segment présente à quel moment (t) quelle luminance (LD).
